# DEMANDE DE BREVET EUROPEEN

(11) **EP 0 917 989 A1**
(43) Date de publication de la demande: **26.05.1999**
(21) Numéro de dépôt: 98490030.8
(22) Date de dépôt: 19.11.1998
(51) Int. Cl.: B60R 11/02, A47G 29/08

(54) **Support de combine pour telephone mobile**

(30) Priorité: 20.11.1997 FR 9714807
(71) Demandeur: Vandamme, Georges, F-59700 Marcq-en-Baroeul (Nord) (FR)
(72) Inventeur: Vandamme, Georges, F-59700 Marcq-en-Baroeul (Nord) (FR)
(74) Mandataire: Lepage, Jean-Pierre

(57) **Abrégé**

La présente invention concerne un support de combiné pour téléphone mobile permettant la mise en place et le maintien du combiné téléphonique à l'intérieur d'un véhicule automobile.

Selon l'invention, le support (1) de combiné pour téléphone mobile comprenant :
- un socle (2) de mise en place sur le rebord supérieur (14) de la garniture d'une portière du véhicule,
- un élément d'appui (3) s'appliquant sur le flanc (15) de la garniture de portière,
- une pièce de fixation du combiné ou porte combiné (12),
caractérisé par le fait que :
- le socle (2) et l'élément d'appui (3) sont montés en liaison glissière,
- des moyens élastiques assurent le réglage du positionnement relatif du socle (2) et de l'élément d'appui (3),
afin d'autoriser la mise à disposition du combiné téléphonique au niveau de l'une des portières du véhicule à un emplacement adapté au confort d'utilisation du conducteur ou d'un passager dans sa position assise et d'adapter la largeur L du support (1) à l'épaisseur de la garniture de portière.

Application dans le domaine des accessoires de téléphonie ainsi que dans le domaine automobile.

## Description

La présente invention concerne un support de combiné pour téléphone mobile permettant la mise en place et le maintien du combiné téléphonique à l'intérieur d'un véhicule automobile.

L'invention trouvera tout particulièrement son application dans le domaine des accessoires de téléphonie ainsi que dans le domaine automobile.

Elle s'appliquera notamment aux téléphones de type cellulaire GSM.

Le téléphone mobile est un moyen de communication qui connaît un fort développement et qui s'utilise dans des circonstances de plus en plus nombreuses. Il est notamment très pratique et fréquent de l'employer dans un véhicule automobile ainsi que de le transporter avec soi lors de ses voyages et de ses déplacements.

Pour le transporter et l'utiliser dans un véhicule automobile, on connaît actuellement des supports aptes à recevoir le combiné afin de le fixer sur la console centrale du véhicule. Le téléphone mobile est ainsi maintenu durant le transport et il est possible de prendre en main le combiné afin de téléphoner.

Les supports actuels présentent plusieurs inconvénients et notamment ils sont souvent fixés à un emplacement éloigné et peu pratique pour l'utilisateur.

Les supports actuels sont disposés sur la console centrale du tableau de bord du véhicule automobile. Cette position est peu pratique car elle oblige l'utilisateur à tendre le bras pour composer le numéro d'appel de son correspondant et pour ensuite prendre en main le combiné afin de débuter la conversation. L'utilisateur a donc ainsi une main occupée lors d'une conversation téléphonique, ce qui est particulièrement gênant surtout si l'utilisateur est le conducteur du véhicule.

Un autre inconvénient des supports actuels est qu'ils se fixent de façon inamovible à l'intérieur du véhicule automobile. Ils sont en effet le plus souvent installés sur la console centrale du tableau de bord au moyen de vis ou de colle. Il n'est donc pas possible de les changer de position de façon très fréquente.

Les supports actuels sont ainsi peu pratiques car ils ne permettent pas de régler leur position vis-à-vis de l'utilisateur afin d'être à une distance optimale de celui-ci. Par exemple, si le support est placé en fonction de la position du conducteur, il sera très peu pratique à utiliser pour un passager et principalement pour les passagers arrière.

Un autre inconvénient des supports actuels est que les systèmes d'accrochage du combiné téléphonique qu'ils proposent ne sont pas pratiques. Les supports étant actuellement placés sur la console centrale du véhicule, chaque communication nécessite de décrocher le combiné du support afin de le porter à l'oreille. Il s'agit ensuite de le remettre en place une fois la communication achevée.

L'utilisateur doit donc effectuer des opérations répétées d'accrochage et de décrochage du combiné par rapport au support. Ces opérations ne s'effectuent pas de façon aisée car les moyens d'accrochage que présentent les supports sont peu pratiques.

Un autre inconvénient des supports actuels est que leur fixation à l'intérieur du véhicule est peu rapide. Cette fixation nécessite en effet des moyens tels que des vis ou un collage qui obligent à réaliser des perçages ou endommager la garniture de la console centrale du tableau de bord. Les opérations de montage des supports actuels sont donc longues et risquent d'endommager l'aspect extérieur du tableau de bord surtout si par la suite on désire supprimer le support.

Un autre inconvénient des supports actuels est qu'ils n'autorisent pas l'adaptation à tout type de véhicule. Les véhicules automobiles présentent un aménagement intérieur variable et les supports actuels sont souvent conçus pour s'adapter à quelques modèles de véhicules uniquement. Ainsi, les systèmes actuels ne sont pas adaptables notamment lorsque l'on change de véhicule.

D'autre part, des dispositifs se développent actuellement pour la conversation téléphonique "mains libres". Ces dispositifs sont munis d'un écouteur de type "oreillette" et d'un microphone de petite dimension de type "boutonnière". L'écouteur et le microphone sont connectés par une fiche et des fils électriques au combiné téléphonique.

Les supports actuels, positionnés au tableau de bord, sont très mal aisés d'utilisation avec ces dispositifs car les fils de connexion interférent avec le volant ou encore le levier de vitesse. Ils sont donc peu adaptés à l'évolution actuelle de la conversation "mains libres".

Par conséquent, les supports actuels ne permettent pas de recevoir tout type de combiné ou de porte combiné. Le consommateur doit impérativement choisir un modèle de support correspondant à son téléphone ce qui limite son choix et n'évite pas les risques d'erreur.

La présente invention concerne un support de combiné pour téléphone mobile qui a pour but de remédier aux inconvénients des supports actuels et qui permet principalement d'autoriser la mise à disposition du combiné téléphonique dans une position adaptée au confort d'utilisation du conducteur ou d'un passager.

L'invention a en effet l'avantage d'être positionnable au niveau de l'une des portières du véhicule et plus précisément au niveau de la garniture des portières. A cet emplacement, le combiné téléphonique est facile d'accès pour l'utilisateur et se place facilement à proximité de son oreille. Le support de combiné pour téléphone mobile selon l'invention présente ainsi un accès rapide et pratique aux touches du téléphone en évitant de prendre en mains le combiné. On peut ensuite suivre la conversation de façon normale.

Contrairement aux supports antérieurs, la présente invention s'adapte efficacement aux dispositifs de conversation "mains libres" avec écouteur oreillette et microphone boutonnière. En effet, sa position proche de l'utilisateur, sur la portière, évite toute gêne dans l'utilisation de ces dispositifs.

Un autre but de l'invention est de permettre un montage et un démontage pratiques du support de combiné pour téléphone mobile.

L'invention a pour cela l'avantage d'être fixée au niveau de la garniture de l'une des portières sans nécessiter l'emploi d'outil pour le vissage ou le collage. Elle réalise ainsi une solidarisation avec la portière du véhicule en évitant l'emploi de moyens extérieurs et en autorisant à tout moment un démontage du support. Elle réduit ainsi considérablement la difficulté et le temps de mise en place du support à l'intérieur du véhicule.

Par ailleurs, la présente invention présente, dans un mode particulier de réalisation, des moyens élastiques qui assurent le réglage du positionnement du support afin de faciliter le réglage et augmenter la rapidité de mise en place du support.

Cet élément est particulièrement avantageux puisqu'il évite l'utilisation d'outils qui sont souvent nécessaires dans le cadre des supports actuels pour visser et dévisser certaines pièces. Par ailleurs, l'utilisation de moyens élastiques permet d'appliquer un effort de maintien sur la portière qui ne soit pas susceptible de l'endommager.

Un autre avantage de la présente invention est d'avoir une conception dont les formes ne limitent pas le réglage de la largeur adaptée à la garniture de portière.

L'invention a également pour objet de permettre un réglage de la position latérale du support de combiné en tonction de l'individu utilisateur.

Elle a en effet l'avantage d'être mise en place de façon très rapide et démontable On peut ainsi aisément modifier sa position et l'adapter en fonction de la morphologie de l'utilisateur et de la position du siège.

Il est également possible de placer le support de combiné pour téléphone mobile au niveau de la portière du conducteur puis de le fixer sur une autre portière pour l'utilisation confortable de l'un des passagers placé aussi bien à l'avant qu'à l'arrière du véhicule.

Des moyens spécifiques autorisent en effet la mise en place sur l'une puis l'autre portière par exemple sur la gauche puis sur la droite de l'intérieur du véhicule. Ces moyens permettent de conserver une bonne orientation du combiné téléphonique par rapport à l'utilisateur qui peut être aussi bien un conducteur qu'un passager.

Un autre but de l'invention est de proposer un support compatible avec de larges types de combinés ou de porte combiné. Ainsi, que le combiné comporte un clips au dos ou des moyens spécifiques d'accrochage tels qu'une glissière permettant d'insérer une languette, le support selon l'invention pourra convenir. De même, si le combiné ou le porte combiné ne comporte aucun moyen d'accrochage, l'invention pourra également s'appliquer par collage du porte combiné sur le support.

Un autre but de l'invention est de prévoir l'accrochage du combiné sur un porte combiné lui assurant une protection et un bon maintien.

Le support de combiné pour téléphone mobile selon l'invention permet en effet une mise en place du combiné téléphonique qui lui assure un bon soutien. Il permet également une meilleure préhension du combiné s'il est par exemple nécessaire de l'approcher de l'oreille. L'invention améliore également l'aspect pratique et rapide des accrochages et décrochages successifs du combiné.

Un autre but de l'invention est d'assurer au combiné un bon maintien tout en autorisant une bonne accessibilité de l'utilisateur au clavier.

D'autres buts et avantages apparaîtront au cours de la description qui va suivre, qui n'est cependant donnée qu'à titre indicatif.

La présente invention concerne un support de combiné pour téléphone mobile permettant la mise en place et le maintien du combiné téléphonique à l'intérieur d'un véhicule automobile, comportant :
- un socle (2) de mise en place sur le rebord supérieur (14) de la garniture d'une portière du véhicule,
- un élément d'appui (3) s'appliquant sur le flanc (15) de la garniture de portière,
- une pièce de fixation du combiné ou porte combiné (12),
caractérisé par le fait que :
- le socle (2) et l'élément d'appui (3) sont montés en liaison glissière,
- des moyens élastiques assurent le réglage du positionnement relatif du socle (2) et de l'élément d'appui (3),
afin d'autoriser la mise à disposition du combiné téléphonique au niveau de l'une des portières du véhicule à un emplacement adapté au confort d'utilisation du conducteur ou d'un passager dans sa position assise et d'adapter la largeur "L" du support (1) à l'épaisseur de la garniture de portière.

L'invention sera mieux comprise au vu des planches de dessins situées en annexe et qui comprennent :
- la figure 1 présente un exemple de montage du support selon l'invention sur une portière,
- la figure 2 illustre le support en vue de dessus dans un mode particulier de réalisation,
- les figures 3 et 4 présentent deux modes particuliers de réalisation des moyens élastiques selon l'invention,
- les figures 5 et 6 présentent deux possibilités de réalisation suivant le mode de fixation du combiné ou du porte combiné,
- la figure 7 présente un mode de réalisation d'un porte combiné adaptable sur le support selon l'invention.
- la figure 8 présente le socle muni de picots,
- la figure 9 présente un autre mode de montage du support selon l'invention sur une portière,
- la figure 10 schématise un mode particulier de réalisation du socle présentant une rainure en T,
- la figure 11 présente un mode particulier de réalisation de l'élément d'appui.

Le support (1) selon l'invention permettra de mettre en place un combiné ou un porte combiné de téléphone mobile à l'intérieur d'un véhicule et plus précisément au niveau de la garniture des portières. Le support (1) pourra être positionné aussi bien à une portière droite qu'à une portière gauche.

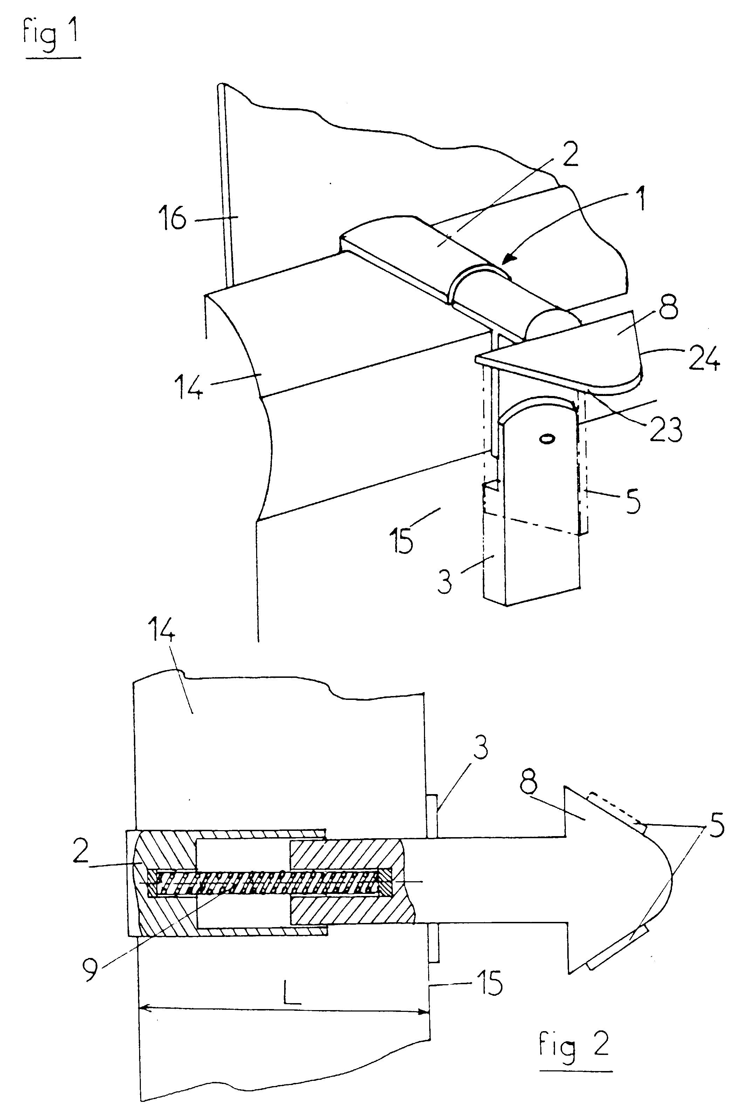

Selon l'invention, le support (1) comporte tout d'abord un socle (2) mis en place sur le rebord (14) de la garniture d'une portière. Cette mise en place est illustrée à la figure 1 qui présente un socle ayant globalement une forme d'équerre.

D'autres formes sont envisageables tant que le socle (2) comporte une surface d'application sur le rebord supérieur (14).

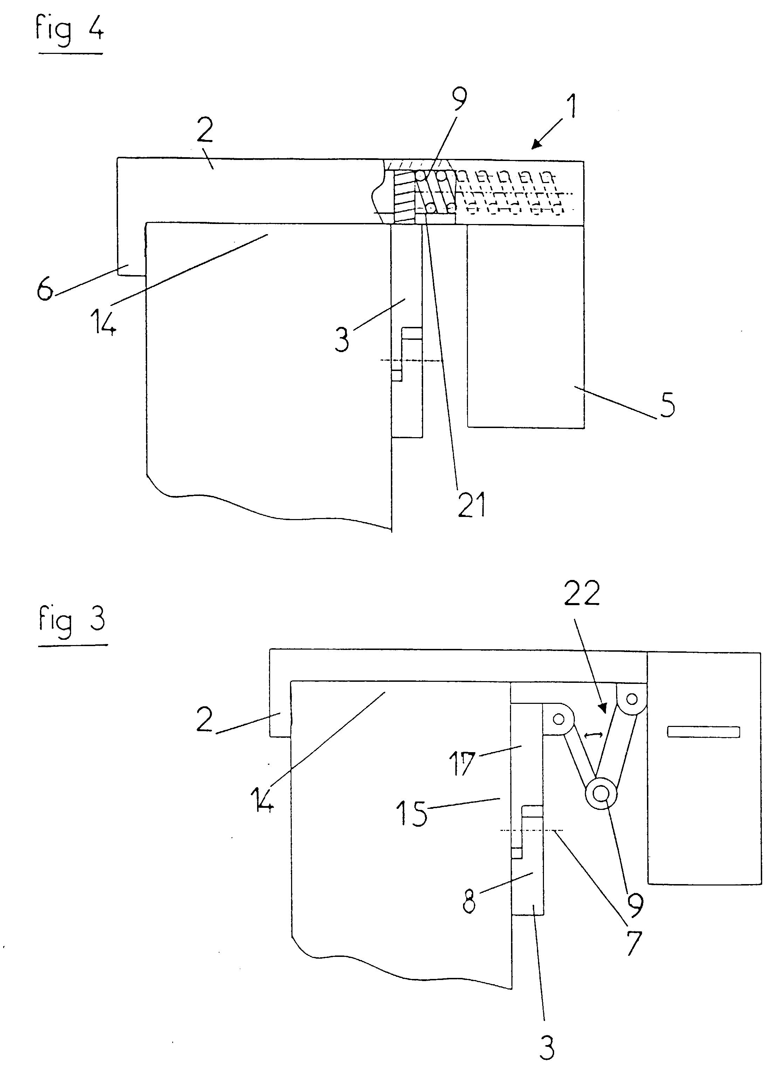

Dans un mode particulier de réalisation, le socle (2) comprend un pan vertical (6) comme le présente également la figure 4.

Le pan vertical est introduit entre la vitre (16) et son joint. De cette façon, le pan vertical (6) assure un positionnement et une fixation du socle (2) de bonne qualité tout en permettant une mise en place pratique.

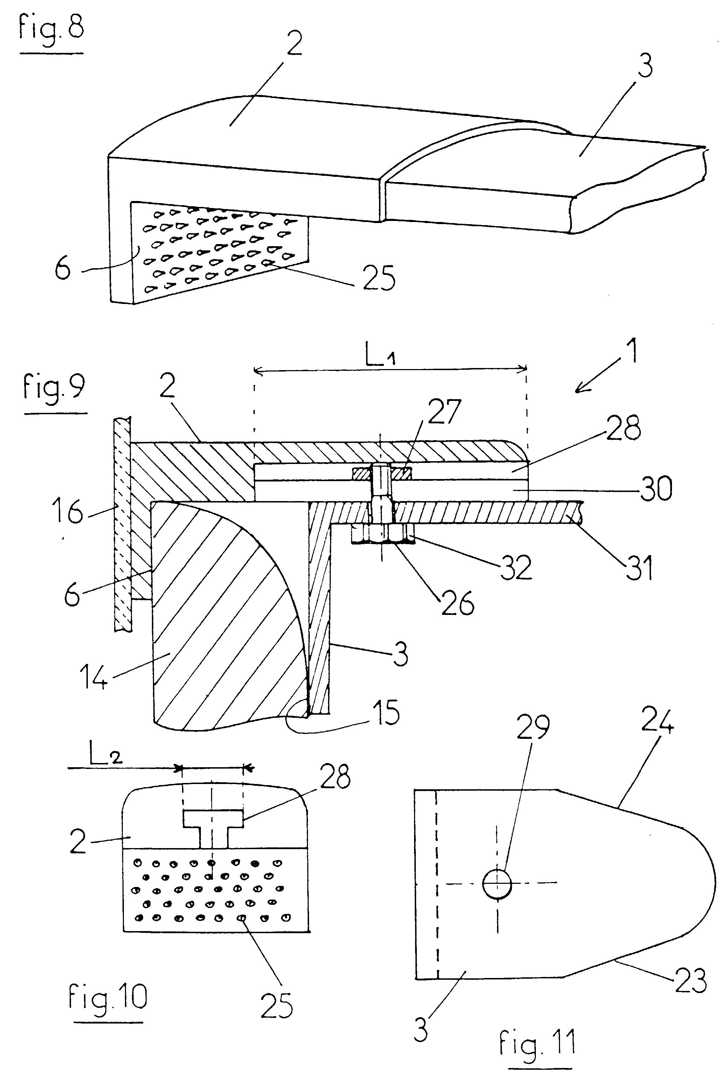

Pour renforcer la fixation du socle (2), la surface (6) entre la fenêtre (16) et la garniture de portière (14) présente en figure 8 des picots (25) qui s'agrippent sur la garniture de portière (14). Ces picots vont s'imprégner légèrement sur la garniture (14), leur position ne change cependant rien quant à l'esthétique de la voiture vis-à-vis des passagers du véhicule.

Le support (1) de combiné pour téléphone mobile ici présenté comporte également un élément d'appui (3) s'appliquant sur le flanc (15) de la garniture de portière.

Cet élément d'appui (3) est, dans un mode préférentiel, de la forme d'une équerre ou d'un T comme réalisé aux figures 9 et 1.

Cet élément d'appui assure le bon positionnement du support (1) par rapport à la garniture. Il pourra être constitué selon différentes conceptions dans la mesure où il comportera une surface permettant l'appui sur le flanc (15).

Dans un mode particulier de réalisation présenté à la figure 3, l'élément d'appui (3) présente deux parties (17, 18) articulées par un pivot (7). De cette façon, la configuration de l'élément d'appui (3) peut être adaptée à différentes géométries du flanc (15) de la garniture de portière. On obtient donc une bonne application de l'élément d'appui pour permettre un positionnement correct et un maintien efficace du support (1).

Par ailleurs, la présence de deux parties (17, 18) articulées par un pivot (7) autorise la mise en place du support (1) selon l'invention sur tout type de véhicule automobile quelle que soit la forme de la garniture de leur portière.

L'invention présentera également une pièce de fixation (5) du combiné ou d'un porte combiné (12). C'est la pièce de fixation (5) qui assure l'accrochage du combiné ou du porte combiné (12) sur le support (1).

Cet accrochage peut être réalisé de différentes manières et l'invention a pour cela l'avantage de proposer différentes réalisations de la pièce de fixation (5) afin de s'adapter aux conceptions diverses des combinés ou porte combinés actuels.

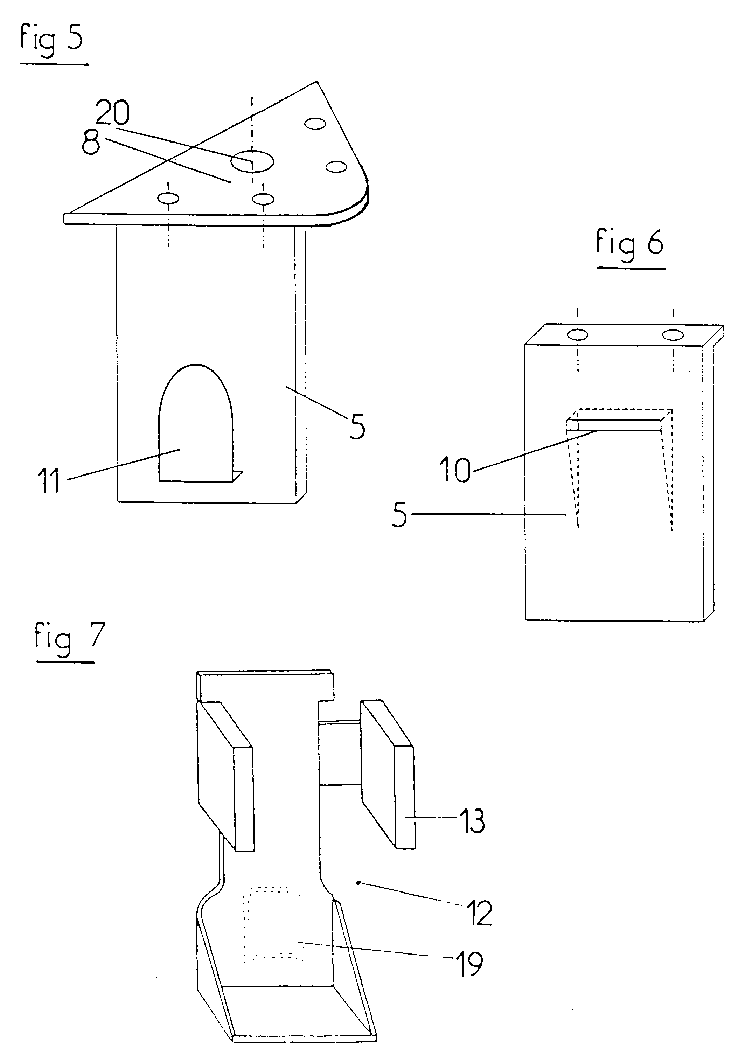

Dans un premier mode de réalisation, la pièce de fixation (5) comprend une face sensiblement plane munie d'une lumière (10) pour l'accrochage d'un combiné ou d'un porte combiné présentant un clips. Cette possibilité est illustrée à la figure 6.

Dans l'exemple représenté, la pièce de fixation (5) est biseautée sur sa face arrière au-dessous de la lumière pour faciliter l'insertion du clips.

Dans ce cas, le clips ou la barrette du combiné téléphonique est très aisément introduit dans la lumière (10) pour réaliser l'accrochage du combiné.

Dans un deuxième mode de réalisation, la pièce de fixation (5) comprend une languette (11) pour l'adaptation d'un porte combiné (12) muni d'une glissière (19). En se référant aux figures 5 et 7, on observe que la glissière (19) d'un porte combiné (12) peut être insérée autour de la languette (11) que présente la pièce de fixation (5).

Dans d'autres cas, le combiné ou le porte combiné ne comporte aucun élément particulier d'accrochage. La fixation du combiné ou du porte combiné s'effectuera alors très pratiquement par collage de la pièce de fixation (5) sur la face arrière du combiné ou du porte combiné.

La pièce de fixation (5) est bien entendu solidaire du reste du support (1) soit par fixation sur le socle (2), soit par fixation sur l'élément d'appui (3). La pièce de fixation (5) peut également être partie intégrante d'un de ces deux éléments (2, 3).

Le support (1) selon l'invention peut être adapté à une portière située à droite ou à gauche du véhicule. Pour réaliser cette adaptation, l'invention comportera préférentiellement un adaptateur (8) illustré notamment à la figure 2.

Suivant cet exemple, l'adaptateur (8) est constitué par un élément de forme sensiblement triangulaire dont les arêtes sont arrondies pour améliorer l'esthétique du support (1), présentant des éléments d'accrochage de la pièce de fixation sur deux de ses côtés appelés côté de fixation (23, 24).

La forme triangulaire de l'adaptateur (8) a l'avantage de réaliser une bonne orientation du combiné par rapport à l'utilisateur.

En fixant la pièce de fixation (5) sur l'un des côtés de fixation (23) de l'adaptateur (8), on réalise un support (1) adapté à l'utilisation d'un conducteur et en la fixant sur l'autre côté de fixation (24), on réalise un support (1) adapté à l'utilisation d'un passager situé de l'autre côté du véhicule.

Suivant cette possibilité, l'adaptateur (8), la pièce de fixation (5) et le socle (2) (ou l'élément support (3)) forment un ensemble monobloc sans aucun risque de déplacement intempestif du combiné en cours d'utilisation ou durant le trajet.

L'adaptation peut également être effectuée au moyen d'un adaptateur (8) et d'une pièce de fixation (5) d'un seul ensemble, la modification d'orientation du combiné étant effectuée par un pivotement de cet ensemble autour d'un axe (20).

Le support (1) de combiné pour radio-téléphone mobile selon l'invention est donc utilisable de façon très pratique par tout utilisateur placé à l'intérieur d'un véhicule. Pour permettre un montage, un démontage et un réglage du positionnement du support très efficaces, l'invention présentera préférentiellement des moyens élastiques assurant le réglage du positionnement relatif du socle (2) et de l'élément d'appui (3).

La présence de moyens élastiques permet d'adapter la largeur L du support (1) en fonction de l'épaisseur de la garniture de portière.

Tel que l'illustre la figure 2, les moyens élastiques permettent une translation de l'élément d'appui (3) par rapport au socle (2). Par réaction, l'élément d'appui (3) s'applique avec un effort souhaité sur le flanc (15) de la garniture de portière.

Les moyens élastiques pourront être constitués de différentes manières et principalement au moyen d'un ou plusieurs ressorts.

Ces ressorts pourront soit travailler en traction, tel que l'illustre la figure 2, soit travailler en compression, tel que l'illustre la figure 4 ou encore en torsion comme présenté à la figure 3.

Ce mode de travail du ressort dépend principalement de la configuration relative du socle (2) et de l'élément d'appui (3) adoptée et du mode de mise en place du ressort par rapport au socle (2) et à l'élément d'appui (3).

Dans un premier mode de réalisation, le ressort (9) travaille en traction comme c'est le cas à la figure 2. Il est fixé, d'une part au socle (2), d'autre part à l'élément d'appui (3). Il sera par exemple intégré au coeur des deux pièces (2, 3) alors réalisées creuses, assurant de cette façon le montage en liaison glissière de l'élément d'appui (3) sur le socle (2).

Par exemple, le socle (2) sera de section rectangulaire creuse pour recevoir et guider en translation une partie de l'élément d'appui (3) de section rectangulaire plus petite.

Cette réalisation est illustrée aux figures 1 et 2, la figure 1 présentant néanmoins des sections légèrement bombées pour adoucir les formes du support (1).

On pourra également utiliser un socle (2) creux dans le cas d'un ressort de compression. La figure 4 montre l'appui du ressort (9) sur la partie haute de l'élément d'appui (3). Celui-ci est alors guidé dans la partie interne (21) du socle (2).

Pour la mise en oeuvre d'un ressort (9) de torsion, on réalise un dispositif (22) de bras pivotants. L'un des bras est lié au socle (2) par une liaison pivot ; l'autre bras est lié à l'élément d'appui (3), également par une liaison pivot. A leur autre extrémité, les deux bras sont reliés au ressort (9) de torsion. La figure 3 montre une réalisation de l'ensemble formé par le dispositif (22) et le ressort (9).

Le support (1) ici présenté se met en place et s'utilise de façon très pratique.

Il suffit en effet d'insérer le pan vertical (6) du socle (2) entre la vitre (16) et son joint puis d'écarter l'élément d'appui (3) par rapport au socle (2) au moyen des moyens élastiques.

Une fois que le socle (2) repose sur le rebord supérieur (14) de la garniture de la portière, on relâche les moyens élastiques constitués par exemple par des ressorts, de façon à ce que l'élément d'appui (3) s'applique naturellement sur le flanc (15) de la garniture de portière.

Si cette garniture a une géométrie particulière, on pourra jouer sur l'inclinaison de la partie (18) de l'élément d'appui (3) pour permettre un positionnement optimal.

Un autre mode de réalisation de la liaison glissière entre le socle (2) et l'élément d'appui (3), pour la fixation du support (1) sur la garniture de portière (14), consiste à utiliser un système vis (26) - écrou (27) monté sur l'élément d'appui (3), qui vient se glisser dans une rainure (28) en forme de T sur le socle (2).

Cette rainure a une longueur L₁ qui correspond à la plage de largeur des différentes garnitures de portière de véhicule existant sur le marché Le réglage peut alors varier de 0 à la largeur des garnitures de portière pouvant exister sur les véhicules. Il suffit alors d'adapter la longueur L₁ du socle (2) suivant les véhicules existants sur le marché.

Etant donné la forme en T de la rainure (28) présentée en figure 10, l'écrou (27) doit avoir une forme carrée ou rectangulaire dont les dimensions correspondent à la longueur L₂ de la forme en T de la rainure (28).

Dans ce cas, le socle (2) et l'élément d'appui (3) seront dans un mode préférentiel de la forme d'une équerre positionnée dans le même sens correspondant à celui présenté à la figure 9. L'élément d'appui (3) est placé sous le socle (2). De cette façon, les formes du socle (2) et de l'élément d'appui (3) n'ont aucun inconvénient et ne réduisent pas la longueur L₂ de réglage prévue sur la rainure (28).

L'élément d'appui (3) dispose d'un trou (29) dans lequel vient se positionner la vis (26). L'écrou (27) de forme carrée est alors vissé sur la vis (26) et il vient se glisser dans la rainure (28), permettant alors la translation de l'ensemble (3 - 26 - 27) le long de la rainure (28).

Lorsque le socle (2) et l'élément d'appui (3) sont convenablement positionnés sur la garniture de portière (14), le maintien en position est assuré par la tête (32) de la vis (26) et l'écrou (27) qui plaque et serre les parties (30 et 31) du socle (2) et de l'élément d'appui (3). Pour éviter l'utilisation d'outil de vissage et donc faciliter le montage et démontage du support (1) sur la garniture de portière (14), la tête (32) de la vis (26) est réalisée dans un mode préférentiel en matière plastique et suffisamment grande pour avoir un couple de serrage efficace manuellement.

Le combiné ou le porte combiné sera orienté pour une utilisation adaptée suivant qu'il s'agit d'une portière droite ou d'une portière gauche. Cette orientation est effectuée au moyen de l'adaptateur (8) qui permet, soit par pivotement, soit par fixation de la pièce (5) sur l'un ou l'autre des cotés de l'adaptateur, de faire varier l'orientation relative de la pièce de fixation (5) par rapport au socle (2).

On choisira une pièce de fixation (5) de conception compatible avec celle du combiné ou du porte combiné.

Dans le cas où le combiné comporte un clips au dos, on utilisera une pièce de fixation (5) munie d'une lumière (10).

Lorsque le combiné ou le porte combiné (12) comporte une glissière (19), on réalisera une pièce de fixation (5) munie d'une languette (11).

Il est également possible d'assembler la pièce de fixation (5) et le combiné ou le porte combiné par tout moyen courant de fixation tel que vis ou collage.

L'utilisateur peut ainsi, de façon très aisée, accéder au combiné téléphonique sans avoir la nécessité de prendre en mains celui-ci. Les touches du combiné sont également parfaitement visibles de par la bonne orientation permise par le support (1) selon l'invention.

Dans le cas d'un changement de véhicule ou d'un changement de position de l'utilisateur à l'intérieur du véhicule, il suffira de procéder à un démontage du support (1) de façon inverse aux étapes de montage exposées plus haut.

La présence de moyens élastiques est sur ce point très avantageuse puisqu'elle exerce une bonne pression de l'élément d'appui (3) sur le flanc (15) de la garniture sans endommager celle-ci. Par ailleurs, les moyens élastiques (4) assurent rapidité et facilité dans le démontage du support (1).

Pour conférer au support (1) ici présenté un aspect pratique supplémentaire, on peut l'associer à un porte combiné (12) présentant une ceinture souple avec des moyens d'accrochage de type velcro ®.

La ceinture permet de ceindre le combiné placé dans le volume du porte combiné pour en assurer un parfait maintien. La présence de velcro ® aux extrémités de la ceinture en autorise le réglage selon le modèle de combiné et notamment selon son épaisseur.

Le porte combiné présentera également des moyens de maintien de la ceinture constituée par tout moyen courant tel que des passants dans lesquels est insérée la ceinture. La position de ces moyens peut être ajustée verticalement par coulissement le long du porte combiné notamment grâce à un ou plusieurs trous oblongs (formés suivant la hauteur du porte combiné) dans le ou lesquels la position de vis de fixation des moyens de maintien peut être réglée.

La hauteur de la ceinture peut alors être réglée suivant le type de combiné et essentiellement selon ses proportions et dimensions. De cette façon, la ceinture ne masque jamais le clavier ou l'écran du téléphone, quel que soit le modèle de téléphone, ce qui est particulièrement avantageux.

Dans un autre mode de réalisation, la pièce de fixation (5) et le porte combiné (12) présentent chacun une plaque magnétique qui permet de les fixer l'un à l'autre. Ainsi, il est possible de les manipuler facilement lors du changement de position du support (1) dans le véhicule.

La plaque magnétique peut être remplacée par une bande de velcro ®.

Dans ce mode de réalisation, la pièce de fixation (5) et le porte combiné (12) ont leur surface d'appui qui sont lisses, sans aucun dispositif d'accrochage, pour bien positionner la plaque magnétique ou la bande de velcro ®.

## Revendications

1. Support (1) de combiné pour téléphone mobile permettant la mise en place et le maintien du combiné téléphonique à l'intérieur d'un véhicule automobile, comprenant :
- un socle (2) de mise en place sur le rebord supérieur (14) de la garniture d'une portière du véhicule,
- un élément d'appui (3) s'appliquant sur le flanc (15) de la garniture de portière,
- une pièce de fixation du combiné ou porte combiné (12),
caractérisé par le fait que :
- le socle (2) et l'élément d'appui (3) sont montés en liaison glissière,
- des moyens élastiques assurent le réglage du positionnement relatif du socle (2) et de l'élément d'appui (3),
afin d'autoriser la mise à disposition du combiné téléphonique au niveau de l'une des portières du véhicule à un emplacement adapté au confort d'utilisation du conducteur ou d'un passager dans sa position assise et d'adapter la largeur L du support (1) à l'épaisseur de la garniture de portière.

2. Support (1) de combiné pour téléphone mobile, selon la revendication 1, caractérisé par le fait que des moyens vis (26) - écrou (27), montés sur l'élément d'appui (3), et une rainure en forme de T, sur le socle (2), assurent la liaison glissière entre le socle (2) et l'élément d'appui (3), et le réglage et le maintien de leur positionnement relatif afin d'adapter la largeur L à l'épaisseur de garniture de portière.

3. Support (1) de combiné pour téléphone mobile, selon la revendication 1, caractérisé par le fait que les moyens élastiques sont constitués par un ou plusieurs ressorts travaillant en traction ou en compression ou encore en torsion entre le socle (2) et l'élément d'appui (3).

4. Support (1) de combiné pour téléphone mobile, selon l'une des revendications 1 à 3, caractérisé par le fait que l'élément d'appui (3) présente deux parties (17, 18) articulées par un pivot (7) afin de permettre une bonne application de l'élément d'appui (3) sur le flanc (15) de la garniture de portière quelle que soit sa géométrie.

5. Support (1) de combiné pour téléphone mobile, selon la revendication 1, caractérisé par le fait que la pièce de fixation (5) comprend une languette (11) pour l'adaptation d'un porte combiné (12) muni d'une glissière (19).

6. Support (1) de combiné pour téléphone mobile, selon l'une des revendications 1 à 5, caractérisé par le fait qu'il comporte un adaptateur (8) permettant de faire varier l'orientation de la pièce de fixation (5) par rapport au socle (2) de façon à adapter le support (1) à une utilisation sur une portière gauche ou droite.

7. Support (1) de combiné pour téléphone mobile, selon la revendication 6, caractérisé par le fait que l'adaptateur (8) est de forme sensiblement triangulaire dont les arêtes sont arrondies et qu'il présente deux côtés de fixation (23, 24) de la pièce de fixation (5), afin d'adapter le support (1) à une utilisation sur une portière gauche ou droite par mise en place de la pièce de fixation (5) sur l'un ou l'autre des côtés de fixation (23, 24).

8. Support (1) de combiné pour téléphone mobile, selon l'une des revendications 1 à 7, caractérisé par le fait que la pièce de fixation (5) est lisse sur toute sa surface qui vient en contact avec le porte combiné (12).

9. Support (1) de combiné pour téléphone mobile, selon l'une des revendications 1 à 8, caractérisé par le fait que la pièce de fixation (5) et le porte combiné (12) sont munis de plaques magnétiques qui assurent la fixation entre ces deux éléments.

10. Support (1) de combiné pour téléphone mobile, selon la revendication 1 , caractérisé par le fait que la surface (6) sur le socle (2) présente des picots (25) qui assurent et renforcent le maintien du support (1) sur la garniture de portière (14).
